Europäisches Patentamt

European Patent Office

Office européen des brevets

(19)

(11) Veröffentlichungsnummer: **0 194 544 B1**

## (12) EUROPÄISCHE PATENTSCHRIFT

(45) Veröffentlichungstag der Patentschrift: **18.09.91**

(51) Int. Cl.5: **C23G 1/36**, C01B 17/90

(21) Anmeldenummer: **86102765.4**

(22) Anmeldetag: **03.03.86**

(54) **Verfahren zur Rezirkulierung metallsulfathaltiger Schwefelsäure.**

(30) Priorität: **14.03.85 DE 3509069**
**29.03.85 DE 3511479**

(43) Veröffentlichungstag der Anmeldung:
**17.09.86 Patentblatt 86/38**

(45) Bekanntmachung des Hinweises auf die
Patenterteilung:
**18.09.91 Patentblatt 91/38**

(84) Benannte Vertragsstaaten:
**BE DE FR GB IT NL**

(56) Entgegenhaltungen:
**EP-A- 0 132 820**
**EP-A- 0 133 505**
**DE-A- 3 128 768**
**FR-A- 1 500 285**
**US-A- 3 743 484**

(73) Patentinhaber: **BAYER AG**

**W-5090 Leverkusen 1 Bayerwerk(DE)**

(72) Erfinder: **Lailach, Günter, Dr.**
**Bodelschwinghstr. 23**
**W-4150 Krefeld(DE)**
Erfinder: **Gerken, Rudolf, Dr.**
**Ratherstr. 79**
**W-4150 Krefeld(DE)**
Erfinder: **van Fürden, Armin, Dipl.-Ing.**
**Schönwasserstr. 212**
**W-4150 Krefeld(DE)**

## Beschreibung

Die vorliegende Erfindung betrifft ein Verfahren zur Rezirkulierung gebrauchter metallsulfathaltiger Schwefelsäure durch Eindampfung der gelöste Metallsulfate enthaltenden verdünnten Schwefelsäure auf einen Gehalt von 40 bis 85 % $H_2SO_4$, bezogen auf salzfreie Säure, Abtrennung der Metallsulfate durch Filtration und Wiederverwendung der abgetrennten Schwefelsäure.

Metallsulfathaltige Dünnsäuren, wie sie bei der $TiO_2$-Herstellung oder als Beizlaugen anfallen, können dadurch entsorgt und einer Wiederverwendung zugeführt werden, daß eine Eindampfung dieser metallsulfathaltigen Schwefelsäuren bis zu einer für die Wiederverwendung geeigneten Konzentration der Säure oder bis zu der Konzentration erfolgt, bei der die Metallsulfate ein Löslichkeitsminimum haben. Die Metallsulfate werden, gegebenenfalls nach Abkühlen der Suspensionen, üblicherweise durch Filtration von der Schwefelsäure getrennt, die danach in den Produktionsprozeß zurückgeführt wird (DE-A-33 27 769, US-A-2 280 508, US-A-2 098 056).

Nach dem Stand der Technik werden für die Filtration dieser im allgemeinen 10 bis 40 Gew.-% Feststoffe mit Korngrößen von vorwiegend 5 bis 100 μm enthaltenden Suspensionen Vakuumtrommelfilter verwendet (Ullmanns Encyklopädie d. techn. Chemie, Verl. Chemie, Weinheim, 4. Aufl. 1972, Bd. 2, S. 188 - 190). Der Vorteil dieser Apparate wird dabei in der einfachen und wirtschaftlichen kontinuierlichen Betriebsweise ohne Bedienungsaufwand gesehen.

Die Nachteile der Vakuumfiltration sind darin zu sehen, daß der Filterkuchen je nach Korngröße und anteiliger Zusammensetzung der Metallsulfate aus der Gruppe der Sulfate und Hydrogensulfate des Eisens, Aluminiums, Magnesiums, Titans, Mangans, Chroms und Vanadin zur Rißbildung neigt und thixotrop ist.

Die Restfeuchte dieses Filterkuchens beträgt üblicherweise zwischen 20 und 40 Gew.-%, entsprechend 12 bis 25 Gew.-% $H_2SO_4$. Diese Schwefelsäure wird nicht nur dem Produktionsprozeß entzogen, sondern erschwert wesentlich die Handhabung und schadlose Beseitigung der Metallsulfate. Bei der ökologisch optimalen Beseitigung der Metallsulfate durch thermische Spaltung wird durch die Restfeuchte der Metallsulfate ein wesentlicher Teil der Spaltkapazität beansprucht. Die Belastung des Prozesses durch Restfeuchte ist aber auch unwirtschaftlich, weil diese eine ca. 80 % höhere spezifische Spaltenergie beansprucht als die Metallsulfate.

Es wurden daher viele Versuche unternommen, durch eine Nachentfeuchtung des mit Vakuumtrommelfiltern erhaltenen Filterkuchens die Restfeuchte zu verringern. Einen gewissen Erfolg erzielt man mit Preßbandfiltern, jedoch ist der technische Aufwand für die zweimalige Filtration zu hoch.

Das Ziel der vorliegenden Erfindung ist es somit, ein Verfahren zur Verfügung zu stellen, welches die obengenannten Nachteile nicht aufweist.

Überraschend wurde nun gefunden, daß eine unerwartet gute Filtration mit minimalem Restfeuchtegehalt des Filterkuchens durch Filtration mit Kerzenfiltern möglich ist, die eine gleichmäßige Kuchenentfeuchtung durch Ausblasen des Filterkuchens mit Druckluft ermöglichen.

Gegenstand der vorliegenden Erfindung ist somit ein Verfahren zur Rezirkulierung gebrauchter metallsulfathaltiger Schwefelsäure durch Eindampfung der gelöste Metallsulfate enthaltenden verdünnten Schwefelsäure auf einen Gehalt von 40 bis 85 % $H_2SO_4$, bezogen auf salzfreie Säure, Abtrennung der Metallsulfate durch Filtration und Wiederverwendung der abgetrennten Schwefelsäure, wobei die Filtration chargenweise mit Kerzenfiltern unter Überdruck erfolgt und der dabei gebildete Filterkuchen zwecks Entfeuchtung mit Druckluft durchblasen wird.

Die erfindungsgemäß eingesetzten Kerzenfilter werden üblicherweise zur Abtrennung sehr feinteiliger Feststoffe und, wegen der diskontinuierlichen Betriebsweise, für feststoffarme Suspensionen eingesetzt. Deshalb bestand auch seitens der Anbieter ein Vorurteil, derartige Kerzenfilter für die Filtration der feststoffreichen relativ leicht filtrierbaren Metallsulfat-Schwefelsäure-Suspension zu empfehlen. Umso überraschender ist es somit, daß mit diesen Kerzenfiltern die Restfeuchte des Filterkuchens gegenüber dem auf Vakuumtrommelfiltern erhaltenen Kuchen sogar um 30 bis 50 % vermindert werden kann, wodurch sich eine entsprechende Erhöhung der Ausbeute an wiederverwendbarer Schwefelsäure ergibt. Angesichts der oben beschriebenen Probleme bei der Handhabung und schadlosen Beseitigung des Filterkuchens sind die Vorteile der erfindungsgemäßen Art der Filtration außerordentlich groß, besonders auch dadurch, daß der erfindungsgemäß gewonnene Filterkuchen nicht thixotrop, sondern krümelig und scheinbar trocken ist.

Als vorteilhaft im Sinne der Erfindung erwies sich, die Filtration so lange durchzuführen, daß die Kuchendicke wenigstens 10 mm, vorzugsweise 20 bis 60 mm, beträgt.

Die Entfeuchtung des Filterkuchens erfolgt dadurch, daß der Kuchen mit Druckluft durchblasen wird. Dabei hängen erforderlicher Druck und Dauer der Durchblasung von der Kuchendicke, der Zusammensetzung des Metallsulfatgemisches, der Konzentration der im Filterkuchen enthaltenen Schwefelsäure und der geforderten Restfeuchte ab. Das wirtschaftliche Optimum ist durch Versuche leicht zu ermitteln. Vorteilhaft

EP 0 194 544 B1

ist die Verwendung von heißer Luft mit Temperaturen von maximal 150°C, vorzugsweise 40 bis 120°C. Erfindungsgemäß wird mindestens 2 min, vorzugsweise 4 bis 10 min, lang mit Druckluft durchblasen.

Die Wiederverwendbarkeit der Schwefelsäure wird wesentlich durch deren Gehalt an gelösten Metallsulfaten beeinflußt. Um diesen Salzgehalt gering zu halten, sind besondere Bedingungen bei der Kristallisation zu beachten (vgl. EP 0 133 505). Außerdem wird der Salzgehalt durch die Temperatur bei der Sulfatabtrennung beeinflußt, die zwischen 40 und 70°C liegt. Bei niedriger Temperatur ist der gelöste Salzgehalt in der Säure zwar kleiner als bei höherer Temperatur, jedoch ist die Filtrierbarkeit der kälteren Suspension deutlich schlechter und nach der Entfeuchtung mit Druckluft verbleiben wesentlich größere Haftfeuchtemengen im Filterkuchen. Eine bevorzugte Ausführung des erfindungsgemäßen Verfahrens vermeidet die Nachteile der Filtration bei tiefer Temperatur und derjenigen bei hoher Temperatur dadurch, daß die Suspension bei tiefer Temperatur filtriert und der Filterkuchen mit heißer Druckluft entfeuchtet wird.

Eine besonders bevorzugte Ausführungsform der erfindungsgemäßen Verfahrens besteht darin, daß die Filtration bei einer Temperatur von 35 bis 50°C erfolgt und die zum Durchblasen verwendete Druckluft eine Temperatur von 70 bis 120°C aufweist.

Eine merkliche Verbesserung gegenüber der herkömmlichen Vakuumfiltration kann durch die Filtration mit Kerzenfiltern erreicht werden, die unerwartet geringe Restfeuchtegehalte im Filterkuchen ermöglichen. Dadurch und im Hinblick auf die einfache Bauart derartiger Filter wird somit ein wesentlicher Fortschritt bei der Bewältigung der Entsorgungsprobleme erreicht.

Besonders gute Resultate werden dann erreicht, wenn für den Fall, daß mehrere Kerzen aufweisende Filter eingesetzt werden, der minimale Abstand zwischen den Filterkerzen 100 bis 150 mm, vorzugsweise 120 bis 130 mm, beträgt und der minimale Abstand zwischen den Kerzen und dem Filtergehäuse 70 bis 100 mm beträgt.

Im folgenden wird die Erfindung beispielhaft erläutert, ohne daß darin eine Einschränkung der Erfindung zu sehen ist.

Beispiel 1 (Vergleichsbeispiel)

In diesem und in den folgenden Beispielen wurde eine metallsulfathaltige 65 %ige Schwefelsäure eingesetzt, die durch Eindampfen einer Dünnsäure aus der $TiO_2$-Produktion erhalten wurde. Diese Metallsulfat-Suspension hatte folgende Zusammensetzung (Angaben in Gew.-%):

| | | | |
|---|---|---|---|
| $FeSO_4 \cdot H_2O$ | 10,6 | $Fe_2(SO_4)_3 \cdot H_2SO_4 \cdot 8\ H_2O$ | 1,1 |
| $Fe_2H_2(SO_4)_3 \cdot H_2O$ | 11,4 | $Al_2(SO_4)_3 \cdot H_2SO_4 \cdot 8\ H_2O$ | 2,7 |
| $MgSO_4 \cdot H_2O$ | 3,6 | $TiOSO_4$ | 2,9 |
| $MnSO_4 \cdot H_2O$ | 0,7 | $VOSO_4$ | 0,3 |
| $H_2SO_4$ | 43,4 | $H_2O$ | 23,3 |

Die Teilchengröße der Sulfate lag, soweit mikroskopisch zu erkennen, zwischen 5 und 120 μm, im wesentlichen zwischen 15 und 80 μm. Die Temperatur betrug 55°C.

Bei Filtration mit einem Vakuumtrommelzellenfilter (Trommeldurchmesser = 2,2 m, Drehzahl = 0,3 $min^{-1}$) wurde ein 8 - 10 mm dicker Filterkuchen erhalten. Der thixotrope Filterkuchen enthielt 28,2 Gew.-% Feuchte, entsprechend 18,3 Gew.-% $H_2SO_4$.

Pro t Suspension wurden 540 kg wiederverwendbare 65 %ige Schwefelsäure und 460 kg Filterkuchen gewonnen.

Beispiel 2 (Vergleichsbeispiel)

Es wurde die im Beispiel 1 beschriebene Suspension mit einer Membranfilterpresse (Pressfilter-Automat P 1 der Fa. Hoesch & Sohne, Düren) filtriert bis zu einer Kuchendicke von 25 mm.

Anschließend wurde der Filterkuchen durch Anpressen der Membrane mit 16 bar ausgepreßt und 10 min lang mit Druckluft (5 bar) zwecks Entfeuchtung durchblasen. Die Restfeuchte des ausgetragenen Kuchens beträgt 20,3 Gew.-%, entsprechend 13,2 Gew.-% $H_2SO_4$.

Bei einem Anpreßdruck von 8 bar ergab sich eine Restfeuchte von 18,9 Gew.-%, entsprechend 12,3 Gew.-% $H_2SO_4$. Die benötigte Ausblasluft (50°C) entsprach einem Badarf an 194 $m^3$(i.N.) pro t Filtersalz.

3

Beispiel 3

Die Suspension aus Beispiel 1 wurde mit einem Kerzenfilter (Fundabac$^{(R)}$ - Filter der Firma DrM, Männedorf/Schweiz) filtriert.

Das Filter war mit 7 Kerzen mit einer Gesamtfläche mit 2,2 m$^2$ bestückt. Der minimale Abstand zwischen den Kerzen betrug 50 mm. Bei 3 bar Überdruck wurde 30 s lang filtriert und 5 min lang mit Druckluft (5 °C) zur Verdrängung der Restfeuchte durch den Filterkuchen geblasen. Dabei fiel der Luftdruck mit Filter von 2,8 auf 2,1 bar ab. Der aus dem Filter ausgetragene Filterkuchen (86 kg) hatte eine Dicke von ca. 20 mm und eine Feuchte von 18,0 Gew.-%, entsprechend 11,7 Gew.-% $H_2SO_4$.

Beispiel 4

Analog Beispiel 3 wurde 30 s lang bei 3 bar filtriert und 5 min lang mit Druckluft (55 °C) durch den Filterkuchen geblasen. Die Restfeuchte betrug danach 14,6 Gew.-% entsprechend 9,5 Gew.-% $H_2SO_4$. Pro t Suspension wurden 610 kg 65 %ige Schwefelsäure (61,9 % $H_2SO_4$, 33,3 %, $H_3O$, 4,8 % gelöste Sulfate) abgetrennt (gegenüber 540 kg/t bei Vakuumfiltration entsprechend Beispiel 1). Der Filterkuchen (390 kg/t Suspension) hatte keine thixotropen Eigenschaften, sondern war ein scheinbar trockenes Pulver. Zum Trockenblasen von 84 kg Filterkuchen wurden 40 m$^3$(i.N.) Druckluft benötigt, entsprechend 476 m$^3$(i.N.)/t Filterkuchen.

Beispiel 5

Um eine größere Kuchendicke zu ermöglichen, wurden aus dem Fundabac$^{(R)}$-Filter 6 Filterkerzen entfernt und nur die zentrale Filterkerze bei den weiteren Versuchen verwendet.

Das Filter (0,31 m$^2$ Filterfläche) wurde 80 s lang bei 5 bar Druck mit der Suspension entsprechend Beispiel 1 beladen. Nach der Trübeentleerung wurde 10 min. lang mit Druckluft (Temperatur 5 °C, Druck von 4,7 auf 3,7 bar fallend) trockengeblasen. Es wurden 28 kg Filterkuchen mit einer Feuchte von 15,9 Gew.-%, entspechend 10,3 Gew.-% $H_2SO_4$, ausgetragen. Die durchschnittliche Kuchendicke betrug 45 mm.

Beispiel 6

Bei dem mit einer Kerze ausgerüsteten Filter wurde (analog Beispiel 5) 80 s lang filtriert und nach der Trübeentleerung 5 min lang mit Druckluft trockengeblasen (Temperatur 55 °C, Druck von 4,5 auf 3,2 bar fallend). Der ausgetragene Filterkuchen hatte eine Restfeuchte von 14,3 Gew.-% entsprechend 9,3 Gew.-% $H_2SO_4$. Zum Trockenblasen von 27 kg Filterkuchen wurde 6 m$^3$(i.N.) Luft benötigt, entsprechend 222 m$^3$(i.N.)/t Filterkuchen.

Beispiel 7

Analog Beispiel 6 wurde 80 sec filtriert und 8 min lang mit Druckluft (Temperatur 75 °C, Druck 3,3 bar) trockengeblasen. Die Restfeuchte des ausgetragenen Filterkuchen (27,5 kg) lag bei 13,5 Gew.-%, entsprechend 8,8 Gew.-% $H_2SO_4$. Der Luftverbrauch lag bei 7 m$^3$(i.N.), entsprechend 255 m$^3$ (i.N.)/t Filterkuchen.

Beispiel 8

Die Suspension entsprechend Beispiel 1 wurde während 5 Stunden von 55 °C auf 42 °C gekühlt und mit einem Kerzenfilter analog Beispiel 6 filtriert. Bei 5 bar Druck wurde 60 s lang filtriert und nach der Trübeentleerung 10 min lang mit Druckluft (40 °C; 4,2 bar) trockengeblasen. Das Filtrat enthielt 62,9 % $H_2SO_4$, 33,8 % $H_2O$ und 3,3 % gelöste Sulfate (vgl. Beispiel 4). Es wurden 16,4 kg Filterkuchen mit 16,7 Gew.-% Restfeuchte, entsprechend 10,9 Gew.-% $H_2SO_4$ ausgetragen. Der Luftverbrauch lag bei 8,3 m$^3$(i.N.), entsprechend 506 m$^3$(i.N.)/t Filterkuchen.

Beispiel 9

Analog Beispiel 8 wurde die Suspension mit einer Temperatur von 42 °C bei 5 bar 80 s lang filtriert. Nach der Trübeentleerung wurde 8 min lang mit Druckluft trockengeblasen, die eine Temperatur von 110 °C und einen Druck von 4,2 bar hatte. Das Filtrat enthielt 62,8 % $H_2SO_4$, 33,8 % $H_2O$ und 3,4 % gelöste Sulfate. Es wurden 20,9 kg Filterkuchen mit einer Temperatur von 55 °C und 13,8 Gew.-% Restfeuchte, entsprechend 9,0 Gew.-% $H_2SO_4$ ausgetragen. Der Luftverbrauch lag bei 5,5 m³(i.N.), entsprechend 263-(i.N.)/t Filterkuchen.

**Patentansprüche**

1. Verfahren zur Rezirkulierung gebrauchter metallsulfathaltiger Schwefelsäure durch Eindampfung der gelöste Metallsulfate enthaltenden verdünnten Schwefelsäure auf einen Gehalt von 40 bis 85 % $H_2SO_4$, bezogen auf salzfreie Säure, Abtrennung der Metallsulfate durch Filtration und Wiederverwendung der abgetrennten Schwefelsäure, dadurch gekennzeichnet, daß die Filtration chargenweise mit Kerzenfiltern unter Überdruck erfolgt und der dabei gebildete Filterkuchen zwecks Entfeuchtung mit Druckluft durchblasen wird.

2. Verfahren gemäß Anspruch 1, dadurch gekennzeichnet, daß der Filterkuchen eine Dicke von mindestens 10 mm, vorzugsweise 20 bis 60 mm aufweist.

3. verfahren gemäß einem der Ansprüche 1 oder 2, dadurch gekennzeichnet, daß der Filterkuchen mindestens 2 min., vorzugsweise 4 bis 10 min., lang mit Druckluft durchblasen wird.

4. Verfahren gemäß einem oder mehrerer der Ansprüche 1 bis 3, dadurch gekennzeichnet, daß die zum Durchblasen des Filterkuchens verwendete Druckluft eine Temperatur von maximal 150°C, vorzugsweise 40 bis 120°C, aufweist.

5. Verfahren gemäß einem oder mehrerer der Ansprüche 1 bis 4, dadurch gekennzeichnet, daß die Filtration bei einer Temperatur von 35 bis 50°C erfolgt und daß die zum Durchblasen des Filterkuchens verwendete Druckluft eine Temperatur von 70 bis 120°C aufweist.

6. Verfahren gemäß einem oder mehrerer der Ansprüche 1 bis 5, dadurch gekennzeichnet, daß der minimale Abstand zwischen den Filterkerzen 100 bis 150 mm, vorzugsweise 120 bis 130 mm, beträgt und der minimale Abstand zwischen den Kerzen und dem Filtergehäuse 70 bis 100 mm beträgt.

**Claims**

1. A process for recirculating used sulfuric acid containing metal sulfates by concentration of the dilute sulfuric acid containing dissolved metal sulfates by evaporation to a content of 40 to 85% $H_2SO_4$, based on salt-free acid, separation of the metal sulfates by filtration and reuse of the sulfuric acid separated off, characterized in that filtration is carried out in batches under excess pressure using candle filters and compressed air is blown through the filter cake formed to remove moisture.

2. A process as claimed in claim 1, characterized in that the filter cake has a thickness of at least 10 mm and preferably from 20 to 60 mm.

3. A process as claimed in claim 1 or 2, characterized in that compressed air is blown through the filter cake for at least 2 mins. and preferably for 4 to 10 mins.

4. A process as claimed in one or more of claims 1 to 3, characterized in that the compressed air blown through the filter cake has a temperature of at most 150°C and preferably from 40 to 120°C.

5. A process as claimed in one or more of claims 1 to 4, characterized in that filtration is carried out at a temperature of 35 to 50°C and the compressed air blown through the filter cake has a temperature of 70 to 120°C.

6. A process as claimed in one or more of claims 1 to 5, characterized in that the minimum interval between the filter candles is 100 to 150 mm and preferably 120 to 130 mm and the minimum interval between the candles and the filter housing is 70 to 100 mm.

**Revendications**

1. Procédé pour recycler de l'acide sulfurique usé contenant du sulfate métallique en concentrant par évaporation l'acide sulfurique dilué contenant des sulfates métalliques dissous jusqu'à une teneur de 40 à 85% de $H_2SO_4$ rapportée à l'acide exempt de sels, en séparant les sulfates métalliques par filtration et en récupérant de l'acide sulfurique, caractérisé en ce que la filtration est effectuée par charge avec des filtres à cartouches et sous surpression et que l'on insuffle de l'air comprimé dans le gâteau de filtration ainsi obtenu afin de le déshydrater.

2. Procédé selon la revendication 1, caractérisé en ce que le gâteau de filtration présente une épaisseur d'au moins 10 mm et, de préférence, de 20 à 60 mm.

3. Procédé selon l'une des revendications 1 ou 2, caractérisé en ce que le gâteau de filtration est traité par l'air comprimé pendant au moins 2 minutes et, de préférence, pendant 4 à 10 minutes.

4. Procédé selon une ou plusieurs des revendications 1 à 3, caractérisé en ce que l'air comprimé utilisé pour l'insufflation dans le gâteau de filtration présente une température de 150°C au maximum et, de préférence, de 40 à 120°C.

5. Procédé selon une ou plusieurs des revendications 1 à 4, caractérisé en ce que la filtration est effectuée à une température de 35 à 50°C et que l'air comprimé utilisé pour l'insufflation dans le gâteau filtrant présente une température de 70 à 120°C.

6. Procédé selon une ou plusieurs des revendications 1 à 5, caractérisé en ce que la distance minimale entre les cartouches filtrantes est de 100 à 150 mm et, de préférence, de 100 à 130 mm et que la distance minimale entre les cartouches et le corps du filtre est comprise entre 70 et 100 mm.